# EUROPÄISCHE PATENTSCHRIFT

(11) **EP 0 505 773 B1**
(45) Veröffentlichungstag und Bekanntmachung des Hinweises auf die Patenterteilung: **05.07.1995**
(21) Anmeldenummer: 92103637.2
(22) Anmeldetag: 03.03.1992
(51) Int. Cl.: F16F 9/32, F16F 9/348

(54) **Stossdämpferkolben aus ungleichen, gefügten Teilen**
Shock absorber piston out of dissimilar, joined pieces
Piston d'amortisseur fait avec des pièces jointes, de forme différente

(30) Priorität: 27.03.1991 DE 4110023
(43) Veröffentlichungstag der Anmeldung: 30.09.1992
(73) Patentinhaber: Ringsdorff Sinter GmbH, 53177 Bonn (DE)
(72) Erfinder: May, Ewald, Dipl.-Ing., W-5300 Bonn 2 (DE)

(56) Entgegenhaltungen:
- EP-A- 0 275 368
- EP-A- 0 407 865
- DE-C- 3 824 420

## Beschreibung

Die Erfindung betrifft einen aus mindestens zwei Teilen durch Fügen hergestellten, auf eine Kolbenstange montierbaren Stoßdämpferkolben und einen aus mindestens zwei Teilen durch Fügen hergestellten Rohling eines Stoßdämpferkolbens, der nach seiner Fertigstellung zu einem Stoßdämpferkolben auf eine in Richtung der Mittelachse des Stoßdämpferkolbens verlaufende Kolbenstange montierbar ist, wobei der Stoßdämpferkolben und der Rohling für den Stoßdämpferkolben auf ihrer Ober- und auf ihrer Unterseite eine im Abstand von der Mittelachse umlaufende, eine Ringkammer einschließende Ringschulter, auf der im späteren, betriebsfertigen Zustand zentral und federnd eingespannte Ventilscheiben oder Ventilfederscheiben zur Abdeckung der Ringkammern aufliegen, aufweisen und zwei Gruppen von durch Zwischenwände getrennten, gegensinnig durchströmbaren Flüssigkeitsdurchtrittskanälen haben, von denen die eine für den Durchfluß in der Zugstufe und die andere für den Durchfluß in der Druckstufe des Stoßdämpferkolbens dient, wobei die eine Gruppe mit Einströmöffnungen radial außerhalb der umlaufenden Ringschulter der Oberseite des Kolbens beginnt, den Kolben im wesentlichen in Richtung auf die Mittelachse schräg durchsetzt und an der Unterseite in Ausströmöffnungen in der Ringkammer endet und die andere Gruppe in umgekehrter Weise mit Einströmöffnungen radial außerhalb der umlaufenden Ringschulter der Unterseite des Kolbens beginnend, den Kolben im wesentlichen in Richtung auf die Mittelachse schräg durchsetzt und an der Oberseite in Ausströmöffnungen in der Ringkammer endet und Verfahren zur Herstellung derartiger Körper.

In der Fertigungstechnik ist man heute bemüht, Formkörper aus metallischen Werkstoffen oder Kunststoffen, die in großen Stückzahlen hergestellt werden müssen, unter Vermeidung oder wo dies nicht vollständig gelingt, Minimierung aufwendiger spanabhebender Verfahren herzustellen. Methoden, die dazu angewendet werden, sind bei Raum- oder erhöhter Temperatur ausgeführte Preßverfahren, der Druckguß, der Feinguß, Stanzen, Stanzen und nachfolgendes Umformen, pulvermetallurgische und Sinterverfahren. Bei der pulvermetallurgischen Herstellung werden Pulver in entsprechend geformten Matrizen mit Stempeln, die profiliert sein können, gegebenenfalls unter Verwendung von Dornen, falls nötig unter Temperaturanwendung zu Formkörpern gepreßt und danach gesintert, gegebenenfalls wieder unter Druckanwendung. Teile aus Kunststoffen können entweder aus Pulvern oder Granulaten in entsprechender Weise bei geeigneten Temperaturen durch ein Preßverfahren, falls erforderlich unter Einschluß eines dem Sintern entsprechenden Verfahrensschrittes oder im plastischen Zustand nach einem Spritzgießverfahren hergestellt werden. Problematisch ist bei diesen Herstellungsverfahren jedoch die Ausbildung von Hinterschneidungen an und in den produzierten Formkörpern. In diesen Fällen greift man häufig auf Kombinationen dieser Verfahren und spanabhebender Formgebung zurück.

Die angegebenen Herstellungsverfahren werden auch bei der Produktion von Stoßdämpferkolben angewendet. Die Anforderungen an die Formgebungstechnik bei der Herstellung moderner Stoßdämpferkolben sind hoch und es hat nicht an Versuchen gefehlt, derartige Formkörper möglichst unter Verzicht spanabhebender Bearbeitungsschritte herzustellen.

So wird z.B. in der Patentschrift DE 38 24 420 ein Kolben für einen hydraulischen Teleskopschwingungsdämpfer mit jeweils einer Gruppe von schräg zur Kolbenstangenachse verlaufenden Flüssigkeitsdurchtrittskanälen für die Zug- und für die Druckrichtung beschrieben, bei dem der Innenradius der einströmseitigen Durchtrittskanäle ausgehend von der Kolbenstangenachse ungefähr so groß ist wie der Außenradius der ausströmseitigen Durchtrittskanäle. Nach dieser Ausführung kann ein einteiliger Kolbenkörper dadurch ohne spanabhebende Bearbeitung hergestellt werden, daß je ein eine Schnitthälfte des Kanals formendes Teil des Preßwerkzeugs axial in Richtung der Kolbenstangenachse von jeweils einer Stirnseite des späteren Kolbenkörpers beim Pressen in das Pulver eintaucht. Nach diesem Verfahren können zwar Stoßdämpferkolben mit gewissen Hinterschneidungen geformt werden, doch treten dabei folgende Nachteile auf: Die die Durchtrittskanäle formenden, in das Pulver eintauchenden Werkzeuge sind großem Verschleiß ausgesetzt, was hohen Wartungsaufwand bedingt oder schlechte Maßhaltigkeit bewirkt. Außerdem sind die Werkzeuge stark bruchanfällig. Beim Pressen entsteht desweiteren in jedem der Durchtrittskanäle ein Grat, der durch aufwendige Nacharbeit unbedingt entfernt werden muß, da sich sonst während des Betriebes Teile dieser Grate lösen und den Stoßdämpfer durch Verschleiß in kurzer Zeit unbrauchbar machen.

Schließlich haben diese Stoßdämpferkolben herstellungsbedingt keine kreisförmige Ringschulter. Sie springt vor und zurück.

Auf pulvermetallurgischem Wege herstellbare Stoßdämpferkolben, bei denen die Flüssigkeitsdurchtrittskanäle den im Kolbenkörper theoretisch dafür vorhandenen Raum optimal ausfüllen und deshalb Hinterschneidungen haben, sind aus der EP-Anmeldung 0 275 368 A2 bekannt. Zur Herstellung derartiger Kolben werden z.B. mittels eines Äquatorialsschnittes durch den Kolben erzeugbare, identisch beschaffene Kolbenkörperhälften, die die Ein- und Ausgangsöffnungen und die Begrenzungen der Flüssigkeitsdurchtrittskanäle enthalten, pulvermetallurgisch erzeugt und sodann nach bekannten Verfahren gefügt. Die Lehre dieser Erfindung umfaßt nur Stoßdämpferkolben, in denen die Flüssigkeitsdurchtrittskanäle den größtmöglichen Raum einnehmen und nach einer bevorzugten Ausführungsform sind diese Stoßdämpferkolben aus zwei identischen Teilen zusammengesetzt. Dies schränkt die Möglichkeiten für die Formgebung der Kolben und ihres Aufbaus stark ein. So ist es z.B. nach dieser Lehre nicht möglich, aus mindestens zwei Teilen gefügte Stoßdämpferkolben zu erhalten, deren Flüssigkeitsdurchtrittskanäle auf der Zugseite anders als auf der Druckseite ausgebildet sind. Des weiteren sind die Möglichkeiten zur Ausformung der Flüssigkeitsdurchtrittskanäle nach strömungstechnischen Gesichtspunkten begrenzt. Nachteilig bei dieser technischen Lösung ist es auch, daß Hälften verfahrensbedingt beim Fügen zum Stoßdämpferkolben zwar im Bereich der Mittelbuchse fest und flüssigkeitsdicht verbunden sind, radial nach außen aber eher lose aufeinanderliegen, so daß sich dort feine Spalte bilden können, die einerseits zwischen den innen liegenden Kanälen untereinander und andererseits zwischen diesen Kanälen und der Kolbenringnut unerwünschte Bypassprobleme hervorrufen. Außerdem ist das spanabhebende Einbringen der Kolbenringnut bei einem aus zwei Teilen zusammengesetzten Mantel eines Stoßdämpferkolbens bearbeitungstechnisch ungünstiger als bei einem einteiligen zylindrischen Kolbenmantel.

Es ist deshalb eine Aufgabe der dieser Patentanmeldung zugrundeliegenden Erfindung, einen Stoßdämpferkolben oder einen Rohling für einen Stoßdämpferkolben der angegebenen Gattung zu schaffen, der in der Ausbildung seiner Funktionselemente, insbesondere der Ausbildung technisch sinnvoller Strömungsdurchtrittskanäle keiner Beschränkung unterliegt und ohne spanabhebende bzw. mit einem Minimum an spanabhebender Bearbeitung herstellbar ist.

Die Aufgabe wird durch die kennzeichnenden Merkmale des Anspruchs 1 gelöst.

Die Teile, die in dieser Schrift als Rohlinge für Stoßdämpferkolben bezeichnet werden, weisen bereits alle für die Funktion eines Stoßdämpferkolbens wesentlichen Elemente, wie Flüssigkeitsdurchtrittskanäle mit ihren ober- und unterseitigen Öffnungen, Ringschulter, Ringkammer, in der Mitte angeordneter Hohlzylinder bzw. eine Nabe zur Aufnahme der Kolbenstange und zur Montage der Federelemente, einen genau vorgegebenen Außendurchmesser und gegebenenfalls Abschrägungen und Profile auf. Unter diesen Teilen und Konstruktionselementen werden im folgenden die Funktionselemente des Stoßdämpferkolbens verstanden. Der Unterschied zwischen einem Rohling und einem fertigen Stoßdämpferkolben besteht darin, daß der Rohling noch geringfügig nachbearbeitet werden muß, um allen Anforderungen eines fertigen Stoßdämpferkolbens zu genügen. Zu nennen sind hier beispielsweise ein Kalibriervorgang, das Einstechen einer Ringnut in die Zylinderaußenfläche, das Fasen von Kanten oder das Planschleifen bzw. -drehen der Ringschultern. Ob derartige Nachbearbeitungen notwendig sind, hängt von den Toleranzanforderungen für das Fertigprodukt ab. Es ist aber auch möglich, erfindungsgemäße Stoßdämpferkolben ohne eine solche Nachbearbeitung direkt herzustellen. Im folgenden soll deshalb der Ausdruck "Stoßdämpferkolben" gleichermaßen für die Ausdrücke "Rohling für einen Stoßdämpferkolben" und "Stoßdämpferkolben" gelten.

Der Aufbau für Stoßdämpferkolben aus zwei bezüglich ihrer körperlichen Gestalt - was hier mit Form gleichgestellt wird - ungleichen, gefügten Teilen ist nach einer Vielzahl von Varianten möglich.

Bei allen Varianten für die hier Schutz begehrt wird, haben die Teile, die nach dem Zusammensetzen die Stoßdämpferkolben bilden, im weiteren Sinne die Gestalt eines flachen Zylinders, bei dem entweder die obere oder die untere Begrenzungsfläche mindestens teilweise fehlt. Die jeweils verbliebene Begrenzungsfläche ist mit Ausnehmungen, Profilen und Durchbrechungen versehen, die sich um die gedachte Mittelachse des Zylinders ertrecken und/oder in einer von einer mehrzähligen Drehachse vorgegebenen Abfolge angeordnet sind. Der Zylindermantel kann geschlossen sein, aber auch Ausnehmungen, Profile und Durchbrechungen aufweisen, die ebenfalls in einer von einer mehrzähligen Drehachse vorgegebenen Abfolge angeordnet sind. Ein gemeinsames Merkmal aller Varianten und Abwandlungen ist es, daß durch einfaches Zusammensetzen und Verbinden der Teile ein Stoßdämpferkolben erhalten wird.

Der Stoßdämpferkolben ist aus einem ersten äußeren Teil, das aus einem äußeren Mantel, an den nach innen hervorspringende Einbauten spezieller Gestalt angeformt sind, besteht und aus mindestens einem zweiten, inneren Teil, das in der Mitte einen Zapfen aufweist, von dem sich Anformungen von ebenfalls spezieller Gestalt nach außen erstrecken, aufgebaut. Die Einbauten bzw. Anformungen spezieller Gestalt des äußeren und des inneren Teils sind in der Weise komplementär, daß sie nach dem Zusammenbau die Funktionselemente des Stoßdämpferkolbens, insbesondere die Flüssigkeitsdurchtrittskanäle ergeben. Der Zapfen des inneren Teils ist mit einer zentrischen, runden oder vieleckigen Ausnehmung versehen. Diese Ausnehmung oder Bohrung dient im fertigen Stoßdämpferkolben zur Aufnahme entweder der Kolbenstange direkt oder einer kalibrierten Hülse, in die dann die Kolbenstange eingesetzt wird. Diese Hülse hat entsprechend der Form der Ausnehmung im Zapfen einen runden oder auch vieleckigen äußeren Mantel.

Das äußere Teil wird in radialer Richtung gesehen außen von einem Zylindermantel begrenzt. Das innere Teil schließt in radialer Richtung gesehen außen mit der Innenwand des Zylindermantels des äußeren Teils ab. Es paßt in das äußere Teil hinein und kann in in der Innenwand des Zylindermantels des äußeren Teils befindliche Schlitze eingreifen, sofern eine solche Ausführungsform vorgesehen ist. Beide Teile sind an einer ihrer Flachseiten, die im späteren Stoßdämpferkolben einen Teil entweder der Ober- oder der Unterseite bilden mit einer im Abstand von der Mittelachse umlaufenden Ringschulter versehen, die kreisförmig sein aber auch einer anderen Kurvenform folgen kann, die aber die Strömungseintritts- und Strömungsaustrittsräume der Flüssigkeitsdurchtrittskanäle voneinander trennt. Radial außerhalb der Ringschulter befinden sich an beiden Teilen die Schlitze bzw. Ausnehmungen für die Einströmöffnungen der Flüssigkeitsdurchtrittskanäle, während radial innerhalb der Ringschulter die Schlitze bzw. Ausnehmungen für die Ausströmöffnungen der Flüssigkeitsdurchtrittskanäle angeordnet sind. Die Ausnehmungen für die Ein- und Ausströmöffnungen ergeben nur in einem Teil der Fälle die Kontur einer allseits mit einer Begrenzung umgebenen Kanalöffnung, wie auch die Flüssigkeitsdurchtrittskanäle in den Teilen nur durch die Formgebung vorgegeben aber nicht ohne weiteres als solche erkennbar sind. Die Flüssigkeitsdurchtrittskanäle und der komplette Stoßdämpferkolben entstehen/entsteht erst durch das gezielte Zusammenfügen des inneren Teils mit dem äußeren in einer Weise, daß die Flüssigkeitsdurchtrittskanäle für die Zug- und für die Druckseite des Stoßdämpferkolbens aus den komplementären Ausnehmungen, Profilen und Durchbrechungen der beiden Teile gebildet werden. Die anderen funktionswesentlichen Elemente wie die Ringschultern und die von diesen eingeschlossenen Ringkammern waren bereits auf den Flachseiten des äußeren und inneren Teils, die später die Ober- und die Unterseite des Kolbenkörpers bilden, vorgeformt. Auch die Ringkammern entstehen in den meisten Fällen erst durch das Zusammensetzen der Teile. Die Fixierung der Teile durch kraft- und meistens auch durch formschlüssige Verbindung aneinander und die Abdichtung der flüssigkeitsführenden Teile gegen Leckagen geschieht mit den Mitteln des Standes der Technik, z.B. vor allem durch Zusammenpressen aber auch durch Sintern, Schweißen, Löten oder Kleben oder geeignete Kombinationen derartiger Verfahren. Stoßdämpferkolben aus Eisen oder dessen Legierungen werden häufig mit einer Magnetitschicht überzogen. Dies dient neben dem Verbinden oder der Verstärkung der Verbindung der Teile der Erhöhung der Oberflächenhärte und zum Abdichten gegen Leckagen. Nach einer Ausführungsform haben in einem derartigen Stoßdämpferkolben die Flüssigkeitsdurchtrittskanäle für die Zug- und die Druckstufe die gleiche Form. Im Gegensatz zu bekannten, ohne spanabhebende Formgebungsverfahren hergestellten Stoßdämpferkolben weisen diese Stoßdämpferkolben eine strömungstechnisch optimale Formgebung der Flüssigkeitskanäle auf, weil der Konstrukteur bei der Ausbildung der die Flüssigkeitsdurchtrittskanäle bildenden Details der komplementären Teile wesentlich mehr Freiheiten hat als bei den anderen Verfahren.

Diese Freiheit in der Formgebung ermöglicht, auch Stoßdämpferkolben zu schaffen, bei denen die Flüssigkeitsdurchtrittskanäle für die Zugstufe eine andere Form als für die Druckstufe haben, wobei auch hier Formen für die Ausbildung bestimmter Strömungscharakteristika gezielt erzeugt werden können. So ist es möglich, trotz unterschiedlicher Form der Kanäle für die Zug- und für die Druckstufe sowohl unterschiedliche als auch gleiche Strömungscharakteristika einzustellen. Dies ist wichtig, weil in der Stoßdämpfertechnik in der Regel das Dämpfungsverhältnis der Zug- zur Druckseite von eins mehr oder weniger stark abweicht.

Die Flüssigkeitsdurchtrittskanäle für die Zug- und die Druckstufe sind konzentrisch im Wechsel um die Mittelachse oder im eingebauten Zustand, um die Kolbenstange angeordnet. Dabei können die Flüssigkeitsdurchtrittskanäle einer oder beider Stufen auch zu Paaren angeordnet sein und im paarweisen Wechsel aufeinanderfolgen oder sich Paare von Kanälen einer Stufe mit Einzelkanälen der zweiten Stufe abwechseln. Abhängig von der Größe und Funktion des Stoßdämpferkolbens können insgesamt vier Flüssigkeitsdurchtrittskanäle, also zwei Kanäle für die Druck- und zwei für die Zugstufe oder auch mehr im Wechsel nebeneinander angeordnet sein. Es kann auch vorteilhaft sein, eine der zwei Öffnungen eines Flüssigkeitsdurchtrittskanals in der Form von zwei nebeneinander liegenden Öffnungen auszubilden und die zwei Anfangskanäle in einen münden zu lassen.

Durch Berücksichtigung der im vorstehenden beschriebenen Konstruktionsmöglichkeiten kann der Fachmann gattungsgemäße Stoßdämpferkolben an alle für die Verwendung und für die Herstellung wichtigen Erfordernisse optimal anpassen.

Stoßdämpferkolben können auch aus zwei flachzylindrischen Teilen zusammengesetzt werden, die durch Horizontalschnitte, d.h. Schnitte senkrecht zur Mittelachse des Stoßdämpferkolbens in beliebiger Höhe des Flachzylinders erhalten werden. Dieses Verfahren bietet jedoch bei weitem nicht die Gestaltungsmöglichkeiten wie das im vor- und nachstehenden beschriebene.

Die Herstellung der Teile, aus denen durch Zusammensetzen der Stoßdämpferkolben erhalten wird, kann für metallische Werkstoffe durch bekannte Gießverfahren wie Druckguß oder Feinguß, oder auf pulvermetallurgischem Wege erfolgen.

Teile aus Kunststoff werden durch Gesenkpressen, Sintern und Pressen sowie Spritzgießen oder Spritzpressen hergestellt. Welches der genannten Verfahren angewendet wird, richtet sich nach dem zu verarbeitenden Werkstoff und nach Fragen des Aufwandes. Metalle wie z.B. Aluminium, Zink, Magnesium, Kupfer, Zinn und Blei sowie deren Legierungen können nach einem Gießverfahren verarbeitet werden. Für die Verarbeitung auf pulvermetallurgischem Wege eignen sich vor allem Metalle wie Kupfer, Aluminium und Eisen und Legierungen dieser Metalle. Stoßdämpferkolben können des weiteren sowohl aus temperatur- und ölbeständigen thermoplastischen wie aus duroplastischen Kunststoffen mit oder ohne einen Anteil an Füllstoffen hergestellt werden. Als Kunststoffe eignen sich insbesondere Polyamide, Polyimide, Polyamidimide, Polyarylenoxide, -ether, -sulfide und -sulfone, Polyarylene, per- und teilfluorierte Polymere wie Tetrafluorethylen, Fluorethylen, Fluorpropylen, Fluoralkoxyvinylether und Fluoralkoxyterpolymere sowie Phenolharze, Furanharze, Epoxidharze, Harze aus ungesättigten Polyestern, aus Diallylphthalat und Bismaleinimidharze. Als Füllstoffe werden bevorzugt Pulver aus Koks, Graphit, Metallen wie z.B. Bronze, Ruß oder Glasfasern, Kohlenstoff- oder Graphitfasern, Aramidfasern oder Asbest verwendet. Es können darüber hinaus noch weitere Füllstoffe, die der Fachmann kennt, eingesetzt werden.

Ein großer Teil der Stoßdämpferkolben wird aus Eisen oder Eisenlegierungen hergestellt. Für deren Verarbeitung sind besonders pulvermetallurgische Verfahren geeignet. Diese Verfahren, die auch unter der Bezeichnung sintermetallurgische Verfahren bekannt sind, sind in der Literatur ausführlich beschrieben, z.B. siehe Offenlegungsschrift DE 37 34 002. Ihre Durchführung ist einfach und wenig aufwendig.

Ein erfindungsgemäßer Stoßdämpferkolben kann wie folgt hergestellt werden: Unter Verwendung entsprechend geformter Preßmatrizen, Stempel und Dorne werden aus einem Metall- oder Kunststoffpulver in einer dem jeweiligen Anwendungszweck angepaßten Körnung und Zusammensetzung, gegebenenfalls unter Zusatz von Preßhilfs-, Gleit- oder Plastifizierungsmitteln mindestens zwei Typen von Formkörpern gepreßt, die unter Berücksichtigung der Volumenänderungen beim Herstellungsgang Form und Maß der für das Zusammensetzen benötigten Teilkörper haben: Einmal die in ihrer Gestalt im vorstehenden genau beschriebenen, mit Inneneinbauten versehenen, im wesentlichen zylindrischen Mantelkörper und zum anderen die in den Mantelkörper passenden Innenkörper, die aus einem mit einer achsialen Bohrung versehenen Zapfen bestehen, an dem die den Inneneinbauten des Mantelkörpers komplementären Inneneinbauten angeformt sind. Die Mantelkörper und deren Inneneinbauten und die Innenkörper und deren Inneneinbauten sind wie bereits beschrieben worden ist, so ausgebildet, daß sie nach dem Fügen die Funktionselemente des Stoßdämpferkolbens ergeben. Nach einer Herstellungsvariante wird die Bohrung für die Aufnahme der Kolbenstange beim Pressen des Innenkörpers mit eingepreßt, nach einer anderen Variante wird eine mittige Ausnehmung von zylindrischer oder vielkantiger, meist sechskantiger Gestalt in den Innenkörper eingepreßt. Bei letzterer Variante muß außerdem eine in die mittige Ausnehmung des Innenkörpers genau passende Hülse gepreßt werden, die beim späteren Zusammensetzen der Teile zum Stoßdämpferkolben in diese Ausnehmung eingesetzt wird. Die Innenbohrung dieser Hülse dient dann der Aufnahme der Kolbenstange. Kompliziert aufgebaute Stoßdämpferkolben können auch aus mehr als den bisher beschriebenen Teilen zusammengesetzt sein. Diese zusätzlichen Teile werden in gleicher Weise durch Pressen erzeugt. Andere Verfahren, nach denen diese Teile hergestellt werden können, sind für metallische Werkstoffe der Druckguß, der Feinguß, das Stanzen sowie das Stanzen gefolgt von einem Umformen und für Kunststoffe das Spritz- oder Druckgießen.

Das Formen der Teile kann bei Umgebungs- oder erhöhter Temperatur erfolgen. Die Höhe der Temperatur richtet sich nach dem Werkstoff, der verarbeitet wird. Sie kann einschlägigen Tabellenwerken entnommen werden. Häufig ist bereits der Preß- mit einem Sintervorgang gekoppelt. Nach dem Entformen werden die zusammengehörenden Teile unter Bildung eines Stoßdämpferkolbens zusammengesetzt. Im üblichen Fall sind dies der Mantelkörper, der Innenkörper und gegebenenfalls die in die Mitte des Innenkörpers einzusetzende Hülse. Bei kompliziert aufgebauten Stoßdämpferkolben sind entsprechend mehr Teile zusammenzufügen. An das Zusammensetzen kann sich ein zusätzlicher Sintervorgang anschließen. Dort, wo dies nicht notwendig ist, werden die Teile durch einen Preßvorgang fest miteinander verbunden. Bei diesem Preßvorgang werden die Kolbenkörper gleichzeitig kalibriert und die Fugen zwischen den einzelnen Teilen flüssigkeitsdicht verschlossen. Die vorgenannten Verfahren gelten unter Berücksichtigung materialspezifischer Eigenheiten sowohl für metallische Werkstoffe wie für Kunststoffe mit und ohne Füllstoffanteil. Andere Verfahren zum kraftschlüssigen Verbinden der Teile untereinander sind das Schweißen, Löten oder Kleben.

Ein anderes, nur für metallische Werkstoffe anwendbares Verfahren bedient sich des Stanzens allein oder des Stanzens mit nachfolgendem Umformen. Hierbei werden aus Blechen mit Hilfe von Stanzwerkzeugen geeigneter Form die Teile, die später zu einem Stoßdämpferkolben zusammengesetzt werden sollen entweder direkt ausgestanzt oder in einem ersten Arbeitsgang Rohlinge für diese Teile ausgestanzt und diese dann durch einen mechanischen Umformvorgang in die für das dann folgende Zusammensetzen gewünschte Form gebracht. Darauf folgt das Zusammensetzen und die sich daran anschließenden, oben beschriebenen Arbeitsgänge.

Falls notwendig, können nun noch spanabhebende Bearbeitungsvorgänge, wie das Einstechen der Ringnut am äußeren Zylindermantel des Kolbenkörpers angeschlossen werden. Bei Körpern aus Eisen oder Eisenlegierungen ist es für die Erhöhung der Oberflächenhärte und zum weiteren Abdichten der Teile untereinander vorteilhaft, die gaszugängliche Oberfläche des Stoßdämpferkolbens durch Behandeln mit überhitztem Wasserdampf bei hoher Temperatur mit einer Magnetitschicht gemäß dem Verfahren nach der Offenlegungsschrift DE 37 34 002 A1 zu überziehen.

Durch die Erfindung wird ein Stoßdämpferkolben bereitgestellt, der bezüglich der Ausbildung seiner Konstruktionsdetails in technisch sinnvollem Rahmen keiner Beschränkung unterliegt und der nach rationellen, in der Fertigungstechnik erprobten Verfahren hergestellt werden kann. Insbesondere können bei diesem Körper infolge dessen Aufbaus aus im wesentlichen frei konstruierbaren Teilen die funktionswesentlichen Elemente beliebig ausgeformt sein. So können die Flüssigkeitsdurchtrittskanäle für die Einstellung jeder Dämpfungskennlinie, ob vorzugsweise linear, progressiv oder degressiv ausgelegt werden. Es können auch Stoßdämpferkolben mit unterschiedlichen Dämpfungscharakteristika für die Zug- und für die Druckseite mit Hilfe entsprechend geformter Flüssigkeitsdurchtrittskanäle geschaffen werden. Die weiteren Funktionselemente wie Öffnungen für die Flüssigkeitsdurchtrittskanäle, Ringschulter und Ringkammer können den funktionellen Erfordernissen gemäß in jeder Hinsicht angepaßt werden. Die Ausformung aller Teile bei der Herstellung ist rationell möglich. Durch die Erfindung ergibt sich in besonderem Maße die Möglichkeit, die von den Funktionsanforderungen gegebenen Formerfordernisse bei der Konstruktion der Stoßdämpferkolben und der Teile, aus denen sie aufgebaut sein sollen, mit einer Minimierung des Materialeinsatzes bei der Herstellung zu kombinieren. Der erfindungsgemäße Stoßdämpferkolben ist wegen seines Aufbaus aus einem inneren und einem äußeren Teil dicht. Pypassprobleme treten praktisch nicht auf. Die Einbringung der äußeren Ringnut ist unproblematisch.

Die Erfindung wird im folgenden anhand von Zeichnungen beispielhaft erläutert. Sie ist jedoch nicht auf die in den Zeichnungen wiedergegebenen Ausführungsformen beschränkt.

Es zeigen
- Fig. 1,: einen erfindungsgemäßen, aus zwei ungleichen Teilen zusammengesetzen Stoßdämpferkolben im Querschnitt;
- Fig. 2,: die Oberseite und
- Fig. 3,: die Unterseite des Fig. 1 entsprechenden Stoßdämpferkolbens in der Draufsicht;
- Fig. 4,: das Mantelteil des Stoßdämpferkolbens nach Fig. 1 im Querschnitt entlang der Linie A-B in Fig. 5 und Fig. 6;
- Fig. 5,: eine Draufsicht auf das Stoßdämpferkolbenteil nach Fig. 4 von oben;
- Fig. 6,: eine Draufsicht auf die untere Seite des Mantelteils des Stoßdämpferkolbens nach Fig. 4;
- Fig. 7,: das in das Mantelteil gemäß Fig. 4 einzusetzende Innenteil des Stoßdämpferkolbens nach Fig. 1 im Querschnitt entlang der Schnittlinie C-D in Fig. 8 und Fig. 9;
- Fig. 8,: eine Draufsicht auf die Oberseite des Innenteils nach Fig. 7 des Stoßdämpferkolbens;
- Fig. 9,: eine Draufsicht auf das Stoßdämpferkolbenteil nach Fig. 7 von unten;
- Fig. 10,: einen anderen, erfindungsgemäßen, aus zwei ungleichen Teilen zusammengesetzten Stoßdämpferkolben im Querschnitt entlang der Schnittlinie E-F in Fig. 11 und Fig. 12;
- Fig. 11,: die Oberseite und
- Fig. 12,: die Unterseite des Stoßdämpferkolbens entsprechend Fig. 10 in der Draufsicht;
- Fig. 13,: einen Ausschnitt aus einem Einrohrstoßdämpfer mit eingebautem Stoßdämpferkolben in axial verlaufendem Schnitt.

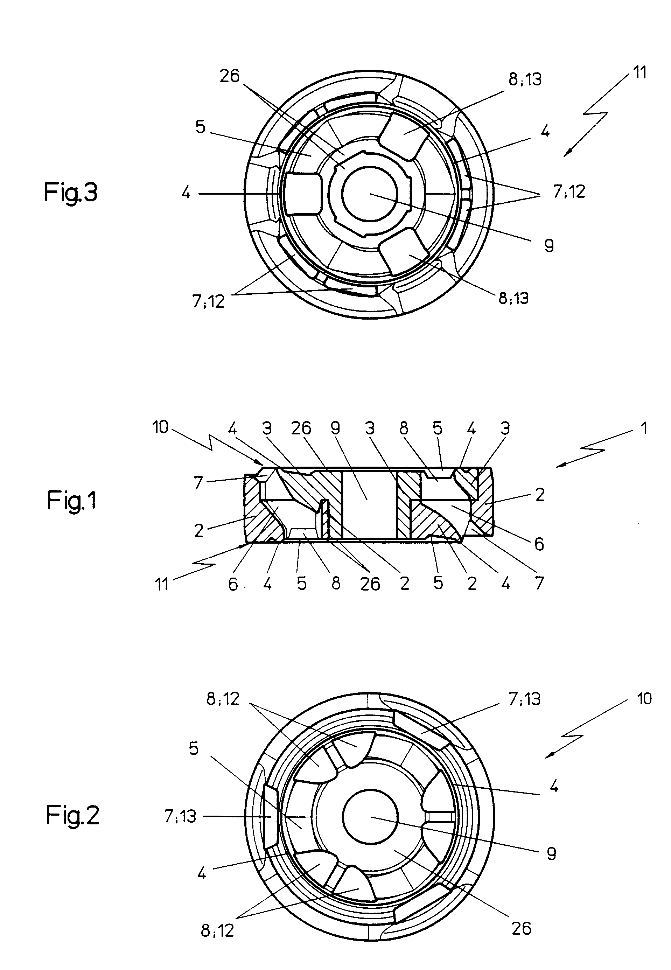

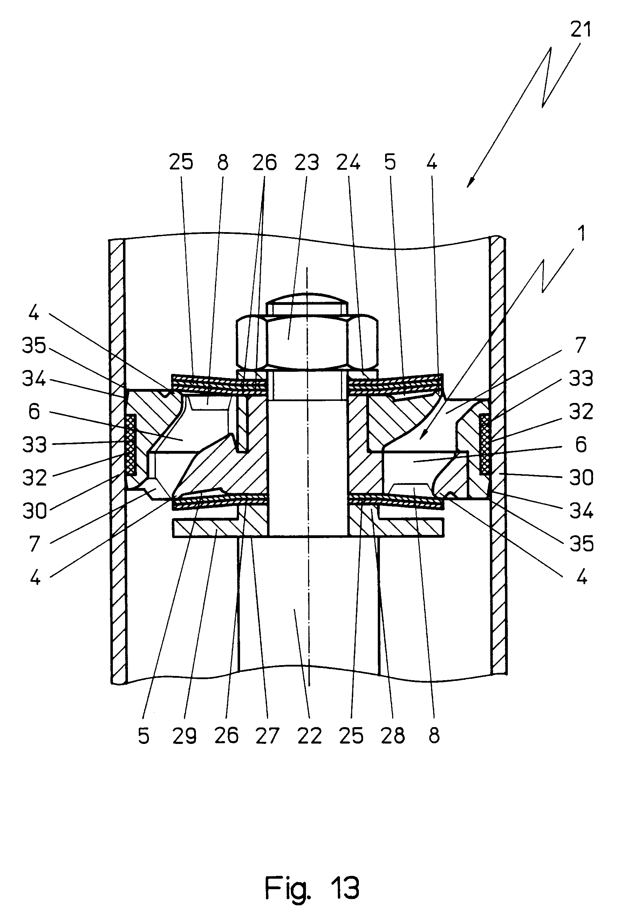

Der in Fig. 1 dargestellte erfindungsgemäße Stoßdämpferkolben 1 besteht aus einem äußeren Mantelteil 2 und einem in diesem Mantelteil 2 befindlichen Innenteil 3. Ober- 10 und Unterseite 11 des Stoßdämpferkolbens 1 haben je eine Ringschulter 4, die die sich von den Ringschultern 4 radial nach innen erstreckenden Ringkammern 5 begrenzt. Der Stoßdämpferkolben wird von Flüssigkeitsdurchtrittskanälen 6 in im wesentlichen axialer Richtung durchsetzt, die in den beiden Flachseiten 10; 11 des Stoßdämpferkolbens 1 enden. Jeder dieser Flüssigkeitsdurchtrittskanäle 6 hat mindestens eine Einströmöffnung die radial außerhalb der Ringschulter 4 und eine Ausströmöffnung 8, die radial innerhalb der Ringschulter 4 liegt. In der Mitte des Stoßdämpferkolbens 1 befindet sich eine zylindrische Bohrung 9 und ein ringförmiger Anschlag 26. Beide dienen der Montage des Stoßdämpferkolbens 1 auf der Kolbenstange 22 (in Fig. 13).

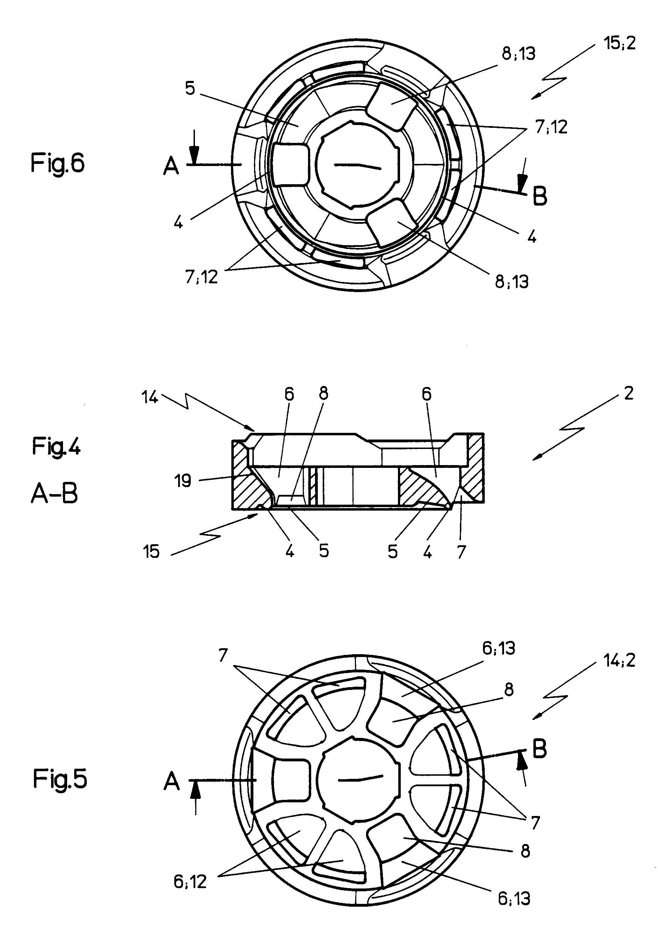

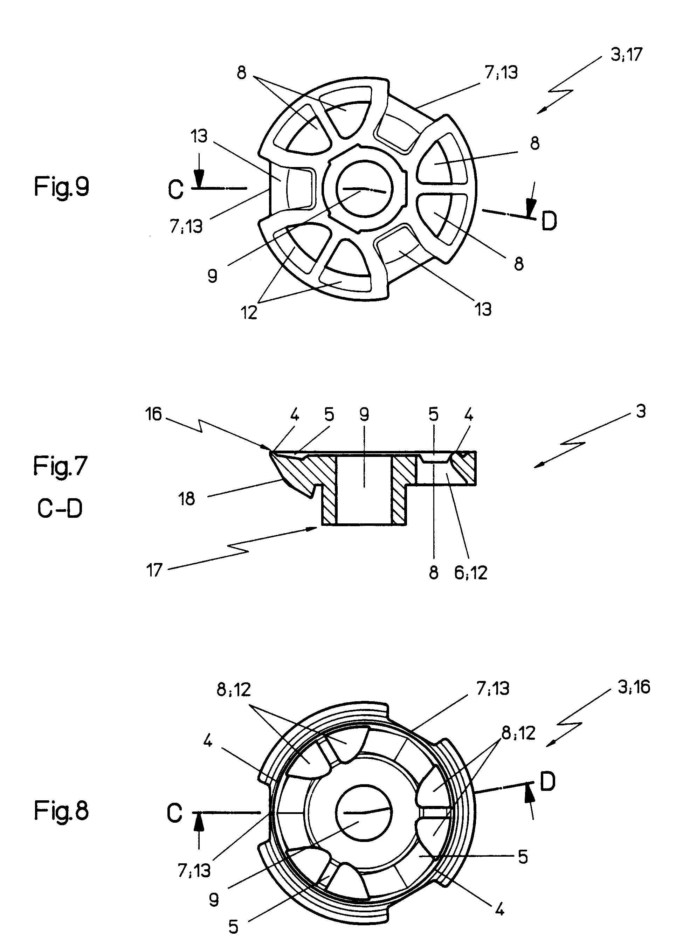

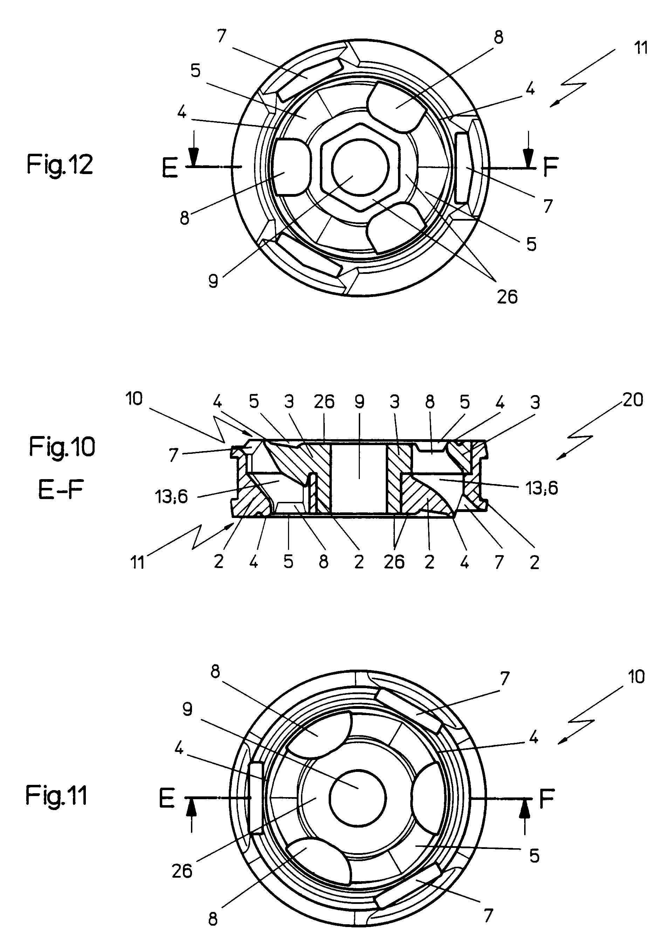

In Fig. 2 ist die Oberseite 10 und in Fig. 3 die Unterseite 11 des Stoßdämpferkolbens 1 wiedergegeben. In beiden Figuren sind folgende Elemente des Stoßdämpferkolbens zu erkennen:
Ringschulter 4, Ringkammer 5, Einströmöffnungen der Flüssigkeitsdurchtrittskanäle 7, Auströmöffnungen der Flüssigkeitsdurchtrittskanäle 8, die axiale, mittige zylindrische Bohrung 9 und der ringförmige Anschlag 26 für die Montage des Stoßdämpferkolbens auf der Kolbenstange. Im vorliegenden Fall liegen je zwei gleiche, paarweise angeordnete Flüssigkeitsdurchtrittskanäle 12 im Wechsel neben einfachen Flüssigkeitsdurchtrittskanälen 13. In Fig. 2 sind von den paarweise angeordneten Flüssigkeitsdurchtrittskanälen 12 die Ausströmöffnungen 8, von den einfachen Flüssigkeitsdurchtrittskanälen 13 die Einströmöffnungen 7 und in Fig. 3 von den paarweise angeordneten Flüssigkeitsdurchtrittskanälen 12 die Einströmöffnungen 7 sowie von den einfachen Flüssigkeitsdurchtrittskanälen 13 die Ausströmöffnungen 8 dargestellt. Die Figur 4 gibt das Mantelteil 2 des Stoßdämpferkolbens 1 von Fig. 1 im Querschnitt entlang der Linie A-B in Fig. 5 und Fig. 6 wieder. Die Figuren 5 und 6 stellen die zwei Draufsichten auf die Oberseite 14, Fig. 5, und auf die Unterseite 15, Fig. 6, dar. In Fig. 4 sind zu erkennen: Die Ringschulter 4 und die von dieser eingeschlossene Ringkammer 5 auf der Unterseite 11 (in Fig. 1 und 3) des Stoßdämpferkolbens 1, zwei Flüssigkeitsdurchtrittskanäle 6, eine Einströmöffnung 7 eines der paarweise angeordneten Flüssigkeitsdurchtrittskanäle 12, (Fig. 2, 3) und eine Ausströmöffnung 8 sowie die radial außenliegende Innenwand 19 eines der einfachen Flüssigkeitsdurchtrittskanäle 13 (Fig. 2, 3). In Fig. 5, in der die Ringschulter 4 und die Ringkammer 5 nicht wiedergegeben werden können, sind 6; 12 die paarweise angeordneten Flüssigkeitsdurchtrittskanäle und 6; 13 die einfachen Durchtrittskanäle. Außerdem sind die Einströmöffnungen 7 der paarweise angeordneten Flüssigkeitsdurchtrittskanäle 12 und die Ausströmöffnungen 8 der einfachen Flüssigkeitsdurchtrittskanäle 13 abgebildet. Die Draufsicht auf die Unterseite, Fig. 6, läßt die Ringschulter 4, die Ringkammer 5, die Einströmöffnungen 7 der paarweise angeordneten Flüssigkeitsdurchtrittskanäle 12 und die Ausströmöffnungen 8 der einfachen Flüssigkeitsdurchtrittskanäle 13 erkennen. Die Figuren 7, 8 und 9 sind Ansichten, erstens in Fig. 7, eines Querschnitts entlang der Linie C-D in Fig. 8 und Fig. 9, zweitens, Fig. 8, einer Draufsicht auf die Oberseite 16 und drittens, Fig. 9, einer Draufsicht auf die Unterseite 17 des Innenteils 3. In Fig. 7 sind die Ringschulter 4 der Oberseite 10 in Fig. 1 des Stoßdämpferkolbens 1, die von dieser Ringschulter 4 eingeschlossene Ringkammer 5, die Ausströmöffnung 8 eines der paarweise angeordneten Flüssigkeitsdurchtrittskanäle 6; 12, die axiale, mittige zylindrische Bohrung 9 und die radial innen liegende Wand 18 des einfachen Flüssigkeitsdurchtrittskanals 13 (in Fig. 2, 3) zu sehen. Die Draufsicht auf die Oberseite 16 des Innenteils 3 in Fig. 8 gibt die Ringschulter 4 der Oberseite 10, (Fig. 1, 2) des Stoßdämpferkolbens 1, die von dieser Ringschulter 4 eingeschlossene Ringkammer 5, die Ausströmöffnungen 8 der paarweise angeordneten Flüssigkeitsdurchtrittskanäle 12, das radial innere Teilstück der Einströmöffnung 7 der einfach angeordneten Flüssigkeitsdurchtrittskanäle 13, (Fig. 2) und die axiale, mittige zylindrische Bohrung 9 wieder. Fig. 9 zeigt die Draufsicht auf die Unterseite 17, also den im Stoßdämpferkolben (1) nach innen gekehrten Teil des Innenteils 3. Es sind zu sehen: Die paarweise angeordneten Flüssigkeitsdurchtrittskanäle 12 und deren Ausströmöffnungen 8, die obere, radial innen liegende Begrenzung der Einströmöffnung 7 für die einfach angeordneten Flüssigkeitsdurchtrittskanäle 13 und den oberen radial nach außen offenen Teil der einfach angeordneten Flüssigkeitsdurchtrittskanäle 13 sowie die axiale, mittige zylindrische Bohrung 9. Durch Einsetzen des Innenteils 3 (Fig.7) in das Mantelteil 2, (Fig 4) in der durch Fig. 1 wiedergegebenen Weise und nachfolgendes Verbinden der zwei Teile miteinander wird der durch die Figuren 1, 2 und 3 dargestellte Stoßdämpferkolben erhalten. Die Figuren 10, 11 und 12 veranschaulichen einen anderen erfindungsgemäßen Stoßdämpferkolben 20. Dieser Stoßdämpferkolben 20 unterscheidet sich vom Stoßdämpferkolben 1 durch anders ausgebildete und angeordnete Flüssigkeitsdurchtrittskanäle 6. Paarweise angeordnete Flüssigkeitsdurchtrittskanäle 12, Fig. 2; 3, sind hier nicht vorhanden. Die durchwegs einfach angeordneten Flüssigkeitsdurchtrittskanäle 13 folgen im Wechsel aufeinander. Sie haben anders geformte Einström- 7 und Ausströmöffnungen 8, die auch in diesem Beispiel für die Druckstufe und die Zugstufe unterschiedlich ausgebildet sind. In Fig. 10 ist ein Querschnitt durch den Stoßdämpferkolben entlang der Linie E-F in Fig. 11 und 12 zu sehen. Die Erläuterung der Figuren und die Bezifferung der Details an ihnen entspricht im wesentlichen den in den Figuren 1, 2 und 3 für den ersten Stoßdämpferkolben 1 gegebenen Beschreibungen und ist auf die Figuren 10, 11 und 12 übertragbar. Ausnahmen hiervon sind die Bezeichnungen für die paarweise und die einfach angeordneten Flüssigkeitsdurchtrittskanäle 12 und 13. Auf eine detailliertere Beschreibung der Figuren 10, 11 und 12 wird wegen der vorgenannten Übertragbarkeit verzichtet. Fig. 13 stellt einen Abschnitt eines Einrohrstoßdämpfers 21 mit eingebautem erfindungsgemäßem Stoßdämpferkolben 1 im Schnitt dar. Der Stoßdämpferkolben 1 ist auf das Ende der Kolbenstange 22 geschoben und durch eine Mutter 23, die gleichzeitig über eine Stützscheibe 24 die ringförmigen Ventilfederscheiben 25 einerseits gegen in Kolbenstangennähe liegende Anschläge 26 in der Ringkammer 5 des Stoßdämpferkolbens 1 und andererseits an die Ringschulter 4 federnd anpreßt, gesichert. An der unteren Seite liegt der Stoßdämpferkolben 1 ebenfalls auf Ventilfederscheiben 25 auf, die über die obere Mutter 23 kolbenstangenseitig mittels einer sich auf einem Absatz 27 der Kolbenstange 22 abstützenden Stützscheibe 28 gegen einen Anschlag 26 in der unteren Ringkammer 5 gespannt werden und die gleichzeitig federnd und dichtend auf der unteren Ringschulter 4 aufliegen. Die Stützscheibe 28 ist hier zum Schutz der Federscheiben 25 gegen zu starke Einfahrstöße mit einem Stützflansch 29 ausgerüstet. Der auf der Kolbenstange 22 montierte Stoßdämpferkolben 1 ist im zylindrischen Rohr 30 des Stoßdämpfers 21 verschiebbar gelagert. Wie auch aus den Figuren 1 und 10 zu sehen ist, wird der Stoßdämpferkolben 1; 20 von Flüssigkeitsdurchtrittskanälen 6, die außerhalb der Ringschulter 4 liegende Einströmöffnungen 7 und innerhalb der Ringschulter 4 in den Ringkammern 5 liegende Ausströmöffnungen 8 haben, durchsetzt. Ein Kolbenring 32, der in einer Ringnut 33 in der zylindrischen Mantelfläche des Stoßdämpferkolbens 1 angeordnet ist, dichtet den Stoßdämpferkolben 1 gegen das Stoßdämpferrohr 30 ab. Die Fasen 34 an den oberen und unteren Kanten 35 des Stoßdämpferkolbens erleichtern verschleißarme Bewegungen des Stoßdämpferkolbens 1 im Rohr 30 des Stoßdämpfers. Die Dämpfungswirkung und die Dämpfungscharakteristik des Stoßdämpfers kann durch die Form der Flüssigkeitsdurchtrittskanäle 6 und die Einstellung und Art der Ventilfederscheiben 25 eingestellt werden.

## Patentansprüche

1. Aus mindestens zwei Teilen durch Fügen herstellbarer Stoßdämpferkolben (1) oder Rohling für einen Stoßdämpferkolben, der auf seiner Ober- (10) und auf seiner Unterseite (11) eine eine Ringkammer (5) einschließende, umlaufende Ringschulter (4), auf der im betriebsfertigen Zustand zentral und federnd eingespannte Ventilscheiben oder Ventilfederscheiben (25) zur Abdeckung der Ringkammern (5) aufliegen, aufweist und der zwei Gruppen von durch Zwischenwände getrennten, gegensinnig durchströmbaren Flüssigkeitsdurchtrittskanälen (6) hat, von denen die eine für den Durchfluß in der Zugstufe und die andere für den Durchfluß in der Druckstufe des Stoßdämpferkolbens (1) dient, wobei die Flüssigkeitsdurchtrittskanäle (6) der einen Gruppe mit Einströmöffnungen (7) radial außerhalb der umlaufenden Ringschulter (4) der Oberseite (10) des Kolbens (1) beginnen, den Kolben (1) im wesentlichen in Richtung auf die Mittelachse schräg durchsetzen und an der Unterseite in Ausströmöffnungen (8) in der Ringkammer (5) enden und die Flüssigkeitsdurchtrittskanäle (6) der anderen Gruppe in umgekehrter Weise mit Einströmöffnungen (7) radial außerhalb der umlaufenden Ringschulter (4) der Unterseite (11) des Kolbens (1) beginnend, den Kolben (1) im wesentlichen in Richtung auf die Mittelachse schräg durchsetzen und an der Oberseite (10) in Ausströmöffnungen (8) in der Ringkammer (5) enden
dadurch gekennzeichnet, daß
sowohl der Rohling als auch der Stoßdämpferkolben (1) aus einem äußeren, mit Inneneinbauten versehenen Mantelteil (2) und einem in dieses eingepaßten Innenteil (3) besteht,
wobei das Innenteil (3) aus einem axial angeordneten, zur Aufnahme einer Kolbenstange (22) bestimmten, mit einer axialen Bohrung (9) versehenen Zapfen und an dem Zapfen befindlichen, den Inneneinbauten des äußeren Mantelteils (2) komplementären Einbauten besteht und das äußere Mantelteil (2) und das Innenteil (3) im zusammengesetzten und miteinander verpreßten Zustand die Funktionselemente des Stoßdämpferkolbens (1) ergeben.

2. Rohling für einen Stoßdämpferkolben und Stoßdämpferkolben nach Patentanspruch 1,
dadurch gekennzeichnet, daß
sowohl der Rohling als auch der Stoßdämpferkolben (1) aus einem die Funktionselemente enthaltenden Teil, das aus mindestens zwei gefügten Teilen und einer damit verbundenen, darin zentrisch angeordneten Hülse, deren zentrale Bohrung der Aufnahme der Kolbenstange dient, besteht.

3. Rohling für einen Stoßdämpferkolben und Stoßdämpferkolben (1) nach den Patentansprüchen 1 oder 2,
dadurch gekennzeichnet, daß
die Flüssigkeitsdurchtrittskanäle (6) für die Zug- und die Druckstufe die gleiche Form haben.

4. Rohling für einen Stoßdämpferkolben und Stoßdämpferkolben (1) nach den Patentansprüchen 1 oder 2,
dadurch gekennzeichnet, daß
die Flüssigkeitsdurchtrittskanäle (6) für die Zugstufe eine andere Form und eine andere Durchströmcharakteristik haben als die Flüssigkeitsdurchtrittskanäle (6) für die Druckstufe.

5. Rohling für einen Stoßdämpferkolben und Stoßdämpferkolben (1) nach den Patentansprüchen 1 oder 2,
dadurch gekennzeichnet, daß
die Flüssigkeitsdurchtrittskanäle (6) für die Zugstufe eine andere Form haben als die Flüssigkeitsdurchtrittskanäle (6) für die Druckstufe aber beide die gleiche Durchströmcharakteristik haben.

6. Rohling für einen Stoßdämpferkolben und Stoßdämpferkolben (1) nach den Patantansprüchen 1 bis 5,
dadurch gekennzeichnet, daß
die Flüssigkeitsdurchtrittskanäle (6) für die Zug- und die Druckstufe konzentrisch um die Mittelachse einzeln oder/und paarweise im Wechsel nebeneinander angeordnet sind.

7. Rohling für einen Stoßdämpferkolben und Stoßdämpferkolben (1) nach den Patentansprüchen 1 bis 6 mit zwei Flüssigkeitsdurchtrittskanälen (6) für die Zug-und zwei Flüssigkeitsdurchtrittskanälen (6) für die Druckstufe, wobei auf jeden Kanal (6) der Druckstufe ein Kanal (6) der Zugstufe folgt.

8. Rohling für einen Stoßdämpferkolben und Stoßdämpferkolben (1) nach den Patentansprüchen 1 bis 6 mit, bezogen auf die Summe von Zug- und Druckstufenkanälen (6), mehr als vier im Wechsel für die Zug- und die Druckstufe nebeneinander angeordneten Flüssigkeitsdurchtrittskanälen (6).

9. Stoßdämpferkolben nach den Patentansprüchen 2 bis 8,
dadurch gekennzeichnet, daß
er auf seiner gaszugänglichen Oberfläche mit einer Magnetitschicht überzogen ist.

## Claims

1. Shock absorbing piston (1) or blank for a shock-absorbing piston, and manufactured from at least two parts by joining, which piston has on its upper side (10) and on its lower side (11) a surrounding annular shoulder (4) enclosing an annular chamber (5) and on which are applied centrally and elastically clamped valve plates or valve spring plates (25) for covering the annular chambers (5), in ready-for-operation state and has two groups of liquid passage channels (6) through which there can be flow in opposing directions and which are separated by partition walls, one of which serves for the throughflow in the traction stage and the other for the throughflow in the pressure stage of the shock-absorbing piston (1),
with the liquid passage channels (6) of one group beginning with the inlet openings (7) radially outside the rotating annular shoulder (4) of the upper side (10) of the piston (1), penetrating the piston (1) substantially in the direction of the central axis in an inclined manner and terminating at the lower side (11) in outlet openings (8) in the annular chamber (5) and the liquid passage channels (6) of the other group, in the reverse manner beginning, with inlet openings (7) radially outside the rotating annular shoulder (4) of the lower side (11) of the piston (1), penetrating the piston (1) substantially in the direction of the central axis in an inclined manner and terminating at the upper side (10) in outlet openings (8) in the annular chamber (5), characterised in that both the blank and the shock absorbing piston (1) consists of an outer casing part (2) provided with interior fittings and an inner part (3) fitting into this,
wherein the inner part (3) consists of an axially arranged peg, determined for receiving the piston rod (22), provided with an axial passage (9) and fittings located on the peg, complementary to the interior fittings of the outer casing part (2) and the outer casing part (2) and the inner part (3) produce in the assembled and pressed together state the functional elements of the shock-absorbing piston (1).

2. A blank for a shock-absorbing piston, and a shock-absorbing piston, according to claim 1, characterised in that the blank as well as the shock-absorbing piston (1) consists of one part containing function elements, which consists of at least two joined parts and a tube connected thereto and arranged centrally therein, the central passage of which serves to receive the piston rod.

3. A blank for a shock-absorbing piston, and a shock-absorbing piston (1), according to claim 1 or 2, characterised in that the liquid passage channels (6) for the traction and the pressure stage have the same shape.

4. A blank for a shock-absorbing piston, and a shock-absorbing piston (1), according to claim 1 or 2, characterised in that the liquid passage channels (6) for the traction stage have a shape and a throughflow characteristic different from the liquid passage channels (6) for the pressure stage.

5. A blank for a shock-absorbing piston, and a shock-absorbing piston (1), according to claim 1 or 2, characterised in that the liquid passage channels (6) for the traction stage have a different shape to the liquid passage channels (6) for the pressure stage, but both have the same throughflow characteristics.

6. A blank for a shock-absorbing piston, and a shock-absorbing piston (1), according to claims 1, 2, 3, 4 or 5, characterised in that the liquid passage channels (6) for the traction stage and the pressure stage are arranged alternately next to each other concentrically around the central axis, singly or/and in pairs.

7. A blank for a shock-absorbing piston, and a shock-absorbing piston (1), according to claims 1 to 6, with two liquid passage channels (6) for the traction stage and two liquid passage channels (6) for the pressure stage, wherein following each channel (6) of the pressure stage there is a channel (6) of the traction stage.

8. A blank for a shock-absorbing piston, and a shock-absorbing piston (1), according to claims 1 to 6, with corresponding to the sum of traction and pressure stage channels (6), more than four liquid passage channels (6) arranged next to each other alternately for the traction and the pressure stage.

9. A shock-absorbing piston according to claims 2 to 8, characterised in that it is covered on its gas-accessible surface with a magnetite layer.

## Revendications

1. Piston amortisseur (1) ou ébauche pour piston amortisseur, pouvant être fabriqué à partir d'au moins deux joints, piston qui présente sur sa face supérieure (10) et sur sa face inférieure (11) un épaulement annulaire (4), qui fait tout le tour, enfermant une chambre annulaire (5) et sur lequel reposent, dans l'état prêt à fonctionner, des rondelles de soupape ou des rondelles élastiques de soupape (25) serrées de façon centrale et élastique, qui servent à recouvrir les chambres annulaires (5), et qui a deux groupes de canaux de passage de liquide (6) séparés par des cloisons intermédiaires et qui peuvent être parcourus en sens contraires, groupes dont l'un sert à l'écoulement du fluide dans la phase de traction du piston amortisseur et l'autre à l'écoulement du fluide dans la phase de compression du piston amortisseur (1), les canaux de passage de liquide (6) de l'un des groupes commençant par des orifices d'entrée (7) radialement en dehors de l'épaulement annulaire (4), qui fait tout le tour, de la face supérieure (10) du piston (1), passant à travers le piston (1) de façon oblique sensiblement dans le sens de l'axe médian, et se terminant sur la face inférieure par des orifices de sortie (8) dans la chambre annulaire (5) et les canaux de passage de liquide (6) de l'autre groupe commençant d'une manière inverse par des orifices d'entrée (7) radialement en dehors de l'épaulement annulaire (4), qui fait tout le tour, de la face inférieure (11) du piston (1), traversant le piston (1) de façon oblique sensiblement dans le sens de l'axe médian, et se terminant sur la face supérieure (10) par des orifices de sortie (8) dans la chambre annulaire (5), ébauche pour piston amortisseur et piston amortisseur caractérisés en ce qu'aussi bien l'ébauche que le piston amortisseur (1) consistent en une partie enveloppante (2) extérieure, pourvue d'appendices intérieurs et une partie intérieure (3) ajustée dans celle-ci, la partie intérieure (3) consistant en un tenon disposé axialement, pourvu, d'un alésage axial (9) conçu pour recevoir une tige de piston (22), et en des appendices, se trouvant sur le tenon, complémentaires des appendices intérieurs de la partie enveloppante extérieure (2), et en ce que la partie enveloppante extérieure (2) et la partie intérieure (3), quand elles sont assemblées et comprimées l'une contre l'autre, fournissent les éléments fonctionnels du piston amortisseur (1).

2. Ebauche pour piston amortisseur et piston amortisseur selon la revendication 1, caractérisés en ce qu'aussi bien l'ébauche que le piston amortisseur (1) consistent en une partie contenant des éléments fonctionnels qui se compose d'au moins deux parties jointes et d'une douille reliée à celles-ci, disposée dedans de façon centrale, dont le perçage central sert à recevoir la tige du piston.

3. Ebauche pour piston amortisseur et piston amortisseur (1) selon l'une des revendications 1 ou 2, caractérisés en ce que les canaux de passage de liquide (6) ont la même forme pour la phase de traction et la phase de compression.

4. Ebauche pour piston amortisseur et piston amortisseur (1) selon les revendications 1 ou 2, caractérisés en ce que les canaux de passage de liquide (6) ont, pour la phase de traction, une autre forme et une autre courbe caractéristique d'écoulement que les canaux de passage de liquide (6) pour la phase de compression.

5. Ebauche pour piston amortisseur et piston amortisseur (1) selon les revendications 1 ou 2, caractérisés en ce que les canaux de passage de liquide (6) pour la phase de traction, ont une autre forme que les canaux de passage du liquide (6) pour la phase de compression, mais ont tous deux la même courbe caractéristique d'écoulement.

6. Ebauche pour piston amortisseur et piston amortisseur (1) selon les revendications 1 à 5, caractérisés en ce que les canaux de passage de liquide (6) sont disposés de façon concentrique, pour la phase de traction et pour la phase de compression, autour de l'axe médian les uns à côté des autres en étant alternés un par un et/ou par paire.

7. Ebauche pour piston amortisseur et piston amortisseur (1) selon les revendications 1 à 6, avec deux canaux de passage de liquide (6) pour les canaux de passage de liquide de traction et deux canaux de passage de liquide (6) pour la phase de compression, un canal (6) de la phase de traction faisant suite à chaque canal (6) de la phase de compression.

8. Ebauche pour piston amortisseur et piston amortisseur (1) selon les revendications 1 à 6, caractérisés par plus de quatre canaux de passage de liquide (6) disposés en alternance côte à côte pour la phase de traction et la phase de compression, rapportés à la somme des canaux (6) des phases de traction et de compression.

9. Piston amortisseur selon les revendications 2 à 8, caractérisé en ce qu'il est recouvert d'une couche magnétique sur sa surface accessible aux gaz.
